# EUROPEAN PATENT APPLICATION

(11) **EP 4 831 251 A1**
(43) Date of publication of application: **28.10.2026**
(21) Application number: 25171549.6
(22) Date of filing: 22.04.2025
(51) Int. Cl.: C09D 11/102, C09D 11/104, C09D 11/107, C09D 11/322, C09D 11/38, C09D 11/40, C09D 11/54

(54) **RESIN CONTAINING AQUEOUS INJKET INK AND RECORDING METHOD**

(71) Applicant: AGFA NV, 2640 Mortsel (BE)
(72) Inventor: VAN AERT, Hubertus, 2640 Mortsel (BE); CORTES SALAZAR, Fernando, 2640 Mortsel (BE); GEUKENS, Christel, 2640 Mortsel (BE); VAN BOUWEL, Nathalie, 2640 Mortsel (BE)
(74) Representative: Lingier, Stefaan Frans L.

(57) **Abstract**

An aqueous ink comprising a pigment, a polyoxyethylene glycol alkyl ether, a water-soluble organic solvent, a microcapsule comprising a crosslinked polymeric shell surrounding a core, the core comprises a second polymer. This aqueous inkjet ink may be included in an ink set further containing a pretreatment liquid comprises a fixing agent.

## Description

### Technical Field

The present invention relates to aqueous inkjet inks comprising microcapsules having a core containing a resin for use in inkjet printing on substrates used for packaging purposes.

### Background Art

Images, printed on non-absorbing and semi-absorbing substrates such as used in packaging have to meet a whole set of requirements, including an excellent adhesion performance, water and solvent resistance, chemical resistance and rub resistance. To meet these requirements, additional resins or polymers are integrated into aqueous ink jet inks which function as a binder. Depending on requirements for a specific application, different resin technologies, have been disclosed in the prior art.

Latex based approaches have been disclosed in the patent literature (see WO2018/114314A, US 2013/0245157A1 and EP3275949A1), having binding capability to fulfil some requirements on physical properties for several applications. However, latex based inkjet inks do generally not improve simultaneously water resistance and rub resistance of printed images on low absorbing substrates such as coated card board liners. Furthermore, latex based ink jet inks have a tendency for film formation in the nozzles of the print head and in the ink supplies, leading to reliability problems during printing. In industrial applications, system reliability and especially jetting reliability is of utmost importance. Therefore, there was still a need for more optimal resin technologies

In WO 2016/165956A aqueous resin based inkjet inks are described wherein the resin is present as a capsule. To achieve good binding properties and hence durable printed images, reactive chemistry such as blocked isocyanates is incorporated in the core of the capsule. The presence of such reactants may give health and safety issues when not completely reacted in the obtained image. Moreover, the release of the reactive chemistry from the core, requires a thermal activation step during or after drying the ink. The thermal activation step comprises the heating of the printed image up to temperatures above 100°C which is not compatible with poly(olefin) based substrates such as polyethylene or polypropylene films.

US2019/0023922 discloses inkjet inks containing capsules having a core which comprises polymerisable compounds such as a polymerisable oligomer or polymer. The polymerisable compounds are polymerized only upon applying UV-light or upon the presence of blocked isocyanates. The requirement of a UV-light source or heating source for activating the blocked isocyanates, create an additional complexity in the design of reliable inkjet printing systems.

WO2022/268645A discloses aqueous inks comprising nanocaps which core does not comprise reactive or polymerisable compounds. Aqueous pigment inkjet inks comprising such nanocapsules do show limited stability upon conservation due to interaction between the pigments and the nanocapsules in the ink. These interactions between the pigments and the nanocapsules lead to viscosity increase upon storage, ink jetting reliability and limited gloss of the printed images with these inks on substrates typically used for packaging.

Therefore, there is still a need for a resin technology for ink jet printing applications, combining excellent physical properties in the end application and jetting reliability on one hand with reliable industrialization on the other hand.

### Summary of the invention

It is the objective of the present invention to provide a solution to the above stated problem. The objective has been achieved by providing an aqueous inkjet ink, comprising microcapsules and a non-ionic surfactant as defined in Claim 1.

It is further an object of the present invention to provide an ink set, at least one of the aqueous inkjet inks is as defined in Claim 10.

It is another embodiment of the invention to provide a printing method using inkjet inks comprising capsules of claim 1 as defined in Claim 14.

Other features, elements, steps, characteristics and advantages of the present invention will become more apparent from the following detailed description of preferred embodiments of the present invention. Specific embodiments of the invention are also defined in the dependent claims.

### Description of embodiments

### A. Aqueous inkjet ink

The objectives of the present invention are realized by an aqueous ink comprising a pigment, a water-soluble organic solvent, a polyoxyethylene glycol alkyl ether and a microcapsule comprising a crosslinked polymeric shell surrounding a core, the core comprises a second polymer.

Without being bound by a theory, it is thought that the polyoxyethylene glycol alkyl ether stabilises the microcapsules in the aqueous ink. This extra stabilisation does prevent interactions between the pigments in the ink.

### A.1. Microcapsule

The microcapsules as included in the aqueous inkjet ink according to the invention can be of any type, preferably microcapsules comprising a crosslinked polymeric shell surrounding a core, the core comprises a second polymer.

The microcapsule dispersions were prepared by means of interfacial polymerization in which an organic phase (e.g. based on ethyl acetate) and an aqueous phase are mixed using a dispersion process. During and/or after the dispersing process a polyisocyanate is reacting to form crosslinked particles. In the dispersion process, an amine crosslinker is added or reaction of the isocyanate with water generates the formation of an amine, which forms in both cases crosslinked particles containing urea groups. Whereas the crosslinking starts mainly at the water - organic phase interface the formed particles are considered as microcapsules having a higher crosslink density at the shell of the particles.

A second polymer such as a polyurethane (PU) may be added during the preparation. This PU can be present both in the core and at the shell of the particle. If the used PUs contain a polyether diol, this may provide also a non-ionic stabilization of the microcap. A preferred polyether diol is Ymer N90, which is known under CAS registry number 131483-27-7, ie. α-[2,2-bis(hydroxymethyl)butyl]-ω-methoxy-poly(oxy-1,2-ethanediyl) having the following structure:

The dispersion process preferably consists of two steps: an emulsification step and a distillation step. The emulsification step can be done by different techniques, including but not limited to rotor-stator emulsification (high shear mixers), high pressure homogenization, microfluidics or ultrasound. The distillation step can be done in batch as well as in a continuous mode using a falling film evaporator, a short path or a thin film evaporator. Afterwards a post curing step can be applied in order to be sure that most or all isocyanate groups have reacted. This can be done by reacting at elevated temperature (e.g. 60 °C) but also at room temperature.

The microcapsules are preferably present in an aqueous inkjet ink in an amount of no more than 45 wt.%, preferably between 1 and 25 wt.% based on the total weight of the ink or liquid. It was observed that above 30 wt.%, jetting was not always so reliable.

The capsules to be used in the inkjet ink, have an average particle size of no more than 4 µm as determined by dynamic laser diffraction. The nozzle diameter of inkjet print heads is usually 20 to 35 µm. Reliable inkjet printing is possible if the average particle size of the capsules is five times smaller than the nozzle diameter. An average particle size of no more than 4 µm allows jetting by jetting heads having the smallest nozzle diameter of 20 µm. In a more preferred embodiment, the average particle size of the capsules is ten times smaller than the nozzle diameter. Hence preferably, the average particle size is from 0.05 to 2 µm, more preferably from 0.10 to 1 µm. When the average particle size of the capsule is smaller than 2 µm, excellent resolution and dispersion stability with time are obtained.

### A.1.1. Polymeric shell

The polymeric shell encapsulates the second polymer and may also assure the dispersibility of the microcapsule in the aqueous vehicle of an inkjet ink.

There is no real limitation on the type of polymer in the polymeric shell of the capsule. Preferably, the polymer is cross-linked. By crosslinking, more rigidity is built into the capsules allowing a broader range of temperatures and pressures for handling the capsules in both the ink making and in the inkjet printing equipment.

Preferred examples of the polymeric shell material include polyureas, polyurethanes, polyesters, polycarbonates, polyamides, polysulphonamides, melamine based polymers, silica based sol-gel polymers or mixtures thereof such as in US603149B1, with polyureas and polyurethanes being especially preferred, polyurea being the most preferred.

The capsules are dispersed in the aqueous medium of the inkjet ink or the pre-treatment liquid preferably via a dispersing group covalently bonded to the polymeric shell and are further stabilised surfactants preferably added during or after the formation of the capsule such a polyoxyethylene glycol based surfactants.

The dispersing group covalently bonded to the polymeric shell, is preferably selected from the group consisting of a carboxylic acid or salt thereof, a sulfonic acid or salt thereof, a phosphoric acid ester or salt thereof, a phosphonic acid or salt thereof.

The dispersing group can be used in combination with a polymeric dispersant in order to accomplish steric stabilization. For example, the polymeric shell may have covalently bonded carboxylic acid groups that interact with amine groups of a polymeric dispersant. A slightly alkaline aqueous medium will turn the carboxylic acid groups covalently bonded polymeric shell into ionic groups, whereafter the negatively charged capsules have no tendency to agglomerate. If sufficient dispersing groups are covalently bonded to the polymeric shell, the capsule becomes a so-called self-dispersing capsule.

These negatively charged capsule surfaces can be advantageously used during inkjet printing. For example, a second liquid such as a pre-treatment liquid containing a fixing agent, being a cationic polymer or multivalent salt, can be used to precipitate the anionic capsules in the inkjet ink printed on top of the second liquid. By using this method an improvement in image quality can be observed due to the immobilisation of the capsules and colorants of the ink.

### A.1.2. Second polymer

The second polymer which is comprised in the core of the microcapsule included in the ink according to the invention, maybe any known polymer. Preferably, the second polymer is a polymer which is substantially free of a reactive group selected from the group consisting of an ethylenically unsaturated group, an epoxy group, an isocyanate group, a β-keto-ester, a β-keto-amide and a 1,3-diketone. Due to the absence of these groups, the second polymer is non-polymerisable and hence not able to react with the shell monomers (see § A.1.3. and § A.2.)

Example of an ethylenically unsaturated group, is a (meth)acrylic group, a vinyl group, an allyl group and a styryl group.

In principle any known second polymer can be used in the present invention. Preferably, the second polymer is soluble in substantial water immiscible organic solvents. In a preferred embodiment, the second polymer is selected from the group consisting of poly(urethane)s and copolymers thereof, acrylics and copolymers thereof, poly(ester)s and copolymers thereof, poly(styrene)s and copolymers thereof, poly(vinyl amide)s and copolymers thereof, poly(olefine)s and copolymers thereof, poly(vinyl alcohol) derivatives and copolymers thereof, poly(acetals) and copolymers thereof, poly(ethers) and copolymers thereof, polyamides and copolymers thereof, poly(imides) and copolymers thereof, poly(imines) and copolymers thereof, polycarbonates and copolymers thereof, poly(vinyl chloride) and copolymers thereof, poly(vinylidene chloride) and copolymers thereof, poly(amic acids) and copolymers thereof, poly(saccharides) and derivatives thereof, cellulose and derivatives thereof and combinations thereof. Derivatives of poly(saccharides) and cellulose are esters and ethers as disclosed in https://en.wikipedia.org/wiki/Cellulose. They comprise cellulose acetate, cellulose triacetate, Cellulose propionate, Cellulose acetate propionate (CAP), Cellulose acetate butyrate (CAB), Nitrocellulose (cellulose nitrate), Cellulose sulfate, methylcellulose, ethyl cellulose, ethyl methyl cellulose, hydroxyethyl cellulose, hydroxypropyl cellulose, hydroxyethyl methyl cellulose, hydroxypropyl methyl cellulose, ethyl hydroxyethyl cellulose, carboxymethyl cellulose.

Poly(urethanes) and acrylics are particularly preferred. Acrylics are defined as polymeric resins obtained by polymerization or copolymerization of acrylates, methacrylates, acrylamides and methacrylamides. In the present invention, acrylate and methacrylate based polymers and copolymers are particularly preferred.

In a preferred embodiment, the second polymer and the first shell monomer such as a polyisocyanate, are mixed prior to the high shear treatment of the interfacial polymerization. The second polymer should then be preferably soluble in the organic solvents forming the oleophilic phase in the interfacial polymerization (see § A.1.3.) or should have at least segments which are soluble or swellable in the organic solvents.

Segmented second polymers, such as graft- or block copolymers, where the different segments have a different solubility in the organic solvent can be used. The presence of hydrophilic segments such as in graft copolymers with polyether chains in the second polymer, seems to be helpful in obtaining microcaps having a particle size of less than 500nm, even less than 200 nm.

When the second polymer is a polyurethane, the incorporation of the hydrophilic grafts can be accomplished by means of copolymerization of polyether diols. When the second polymer is a polyacrylate, the incorporation of hydrophilic grafts can be accomplished by graft copolymers of methacryl terminated polyethylene glycol. Examples are a polyethylene glycol functional polyacrylate copolymer such as Byk LPG21241, or polyethylene glycol based block copolymers which are well soluble in the organic phase (ethyl acetate). Such block copolymers contain then besides the water compatible polyether chains also segments which are insoluble in water (e.g. polyester, polyether).

Suitable polyether diols in the present invention, are Ymer N120, Ymer N90 or Tegomer D 3403, i.e. α-[2,2-bis(hydroxymethyl)butyl]-ω-methoxy-Poly(oxy-1,2-ethanediyl). These diols can be prepared from trimethylol propane oxetane (TMPO). A possible synthesis procedure is described by Fock, J.; Möhring, V., Polyether-1,2- and -1,3-diols as macromonomers for the synthesis of graft copolymers, 1. Synthesis and characterization of the macromonomers. Die Makromolekulare Chemie 1990, 191 (12), 3045-3057. In general, also other polyether 1,2- or 1,3-diols can be used.

The second polymer can be a poly(ester). Suitable poly(esters) can be selected from the group consisting of copolymers of dicarboxylic acids like terephtalic acid, isophalic acid, adipic acid, succinic acid or alkylesters thereof or copolymers prepared by ring opening polymerisation of cyclic esters, such as caprolactone or cyclic diesters like DL-lactide.

Suitable poly(ethers) as second polymer can be selected from the group consisting of polyalkylene oxides or copolymers, polyphenylene oxide, polystyrene oxide and polyTHF.

Suitable poly(acetals) as second polymer can be selected from the group consisting of poly(vinyl butyral), polyvinylacetaldehyde, and reaction products of hydroxyfunctional polymers with aliphatic or aromatic aldehydes.

Suitable poly(urethanes) as second polymer can be obtained by polymerization of di- or polyisocyanates with diols. Typical di-isocyanates can be selected from the group consisting of isophorone diisocyanate (IPDI), 4,4'-dicyclohexylmethane diisocyanate (H12MDI), 2,4,4'-trimethyl-1,6-hexamethylene diisocyanate (TMDI), hexamethylene diisocyanate (HMDI), pentamethylene diisocyanate (PDI), tolylene diisocyanate (TDI), xylene diisocyanate (XDI) and diphenylmethane diisocyanate (MDI).

Diols can be low molecular weight compounds but oligomeric diols are particularly preferred. Typical oligomeric diols can be selected from the group consisting of polyester polyols, polyether polyols, polyamide polyols, polyacrylate polyols, polycarbonate polyols and polyolefine polyols.

Suitable acrylics as second polymer are obtained by polymerization of monomers selected from the group consisting of ethylacrylate, butylacrylate, methylmethacrylate, ethylmethacrylate, methyl acrylate, butylmethacrylate, 2-ethylhexyl acrylate, 2-ethylhexyl methacrylate, stearyl acrylate, stearyl methacrylate, lauryl acrylate, lauryl methacrylate, cetyl acrylate, cetyl methacrylate, cyclohexyl acrylate, cyclohexyl methacrylate, isopropyl acrylate, isopropyl methacrylate and copolymers of acrylic or methacrylic monomers with monomers selected from the group consisting of alpha-methylstyrene, vinylacetate, vinyl versatate, butadiene, isoprene, acrylonitrile, methacrylonitrile, styrene, para-methylstyrene, tert.-butylstyrene, butyl vinylether, hydroxybutyl vinylether and ethylene.

The second polymer preferably has a weight average molecular weight (M_{w}) between 500 g/mol and 400.000 g/mol, more preferably between 1000 g/mol and 100.000 g/mol and most preferably between 2000 g/mol and 50.000 g/mol.

The second polymer preferably has a numeric average molecular weight (Mn) between 300 g/mol and 200.000 g/mol, more preferably between 1000 g/mol and 50.000 g/mol and most preferably between 1000 and 30.000 g/mol.

### A.1.3. Preparation of the microcapsules

The microcapsules included in the ink of the invention can be prepared using both chemical and physical methods. Suitable encapsulation methodologies include complex co-acervation, liposome formation, spray drying and polymerization methods.

In the present invention preferably a polymerization method is used, as it allows the highest control in designing the capsules. More preferably interfacial polymerization is used to prepare the capsules of the invention. This technique is well-known and has been reviewed by Zhang Y. and Rochefort D. (Journal of Microencapsulation, 29(7), 636-649 (2012) and by Salitin (in Encapsulation Nanotechnologies, Vikas Mittal (ed.), chapter 5, 137-173 (Scrivener Publishing LLC (2013)).

In interfacial polymerization, such as interfacial polycondensation, two reactants meet at the interface of the emulsion droplets and react rapidly.

In general, interfacial polymerization requires the emulsion of an oleophilic phase in an aqueous continuous phase or vice versa. The oleophilic phase is preferably obtained by using a substantially water immiscible organic solvent. Each of the phases contains at least one dissolved monomer (a first shell monomer) that is capable of reacting with another monomer (a second shell monomer) dissolved in the other phase. Upon polymerisation, a polymer is formed that is insoluble in both the aqueous and the oleophilic phase. As a result, the formed polymer has a tendency to precipitate at the interface of the oleophilic and aqueous phase, hereby forming a shell around the dispersed phase, which grows upon further polymerisation. The capsules according to the present invention are preferably prepared from an oleophilic emulsion in an aqueous continuous phase.

Typical polymeric shells of the capsules according to the invention and formed by interfacial polymerisation are selected from the group consisting of polyamides, typically prepared from di- or poly-acid chlorides as first shell monomers and di- or oligoamines as second shell monomers, polyurea, typically prepared from di- or oligoisocyanates as first shell monomers and di- or oligoamines as second shell monomers, polyurethanes, typically prepared from di- or oligoisocyanates as first shell monomers and di- or oligoalcohols as second shell monomers, polysulfonamides, typically prepared from di- or oligosulfochlorides as first shell monomers and di- or oligoamines as second shell monomers, polyesters, typically prepared from di- or oligo-acid chlorides as first shell monomers and di- or oligoalcohols as second shell monomers and polycarbonates, typically prepared from di- or oligo-chloroformates as first shell monomers and di- or oligoalcohols as second shell monomers. The shell can be composed of combinations of these polymers.

In a preferred embodiment of the invention, interfacial polymerization is performed and a polyurea shell is formed at the interface. Preferably, the first shell monomer is a polyisocyanate present in the oleophilic phase, while polyamines are present in the aqueous phase as the second shell monomer and which acts as a crosslinker. Polyamines are preferred whereas polyols show a much slower reaction rate. Alternatively, the second shell monomer can be omitted as water can react with the isocyanate moiety and can form an amine. This in-situ formed amine can then further react with another isocyanate moiety present in the polyisocyanate. So even without adding a second shell monomer a crosslinked polyurea shell can be obtained.

In a particularly preferred embodiment, the shell is composed of a polyurea or a combination thereof with a polyurethane. In a further preferred embodiment, a substantial water immiscible solvent is used in the dispersion step, which is removed by solvent stripping before or after the shell formation. In a particularly preferred embodiment, the water immiscible solvent has a boiling point below 100°C at normal pressure. Esters and ketones are particularly preferred as water immiscible solvent.

A substantial water immiscible solvent is an organic solvent having low miscibility in water. Low miscibility is defined as any water solvent combination forming a two phase system at 20°C when mixed in a one over one volume ratio.

The core of the microcap contains the second polymer. This is usually incorporated into the capsules by dissolving it in the organic solvent having low miscibility with water and having a lower boiling point than water. A preferred organic solvent is ethyl acetate, because it also has a low flammability hazard compared to other organic solvents.

A preferred strategy to incorporate anionic stabilizing groups into the polymeric shell of a capsule makes use of carboxylic acid functionalized reactive surfactants that are capable of reacting with isocyanates. This leads to an amphoteric type of surfactant containing at least partially secondary or primary amines. Other reactive surfactants functionalized with a sulfonic acid or salt thereof, a phosphoric acid ester or a salt thereof or a phosphonic acid or salt thereof can be used.

In a preferred embodiment of the invention, the microcaps are prepared with the polyoxyethylene glycol alkyl ether added in the aqueous continuous phase.

The capsules according to the invention are dispersed into an aqueous medium. The aqueous medium consists of water, but may preferably include one or more water-soluble organic solvents.

### A.2. Polyoxyethylene glycol alkyl ether

The aqueous inkjet ink according to the invention comprises a polyoxyethylene glycol alkyl ether. Without being bound by a theory, it is thought that the polyoxyethylene glycol alkyl ether can stabilize the microcapsules in the aqueous inkjet ink vehicle which comprises water and which may further comprise a water-soluble organic solvent. Suitable polyoxyethylene glycol alkyl ethers are polyoxyethylene lauryl ether, polyoxyethylene octyl phenyl ether, polyoxyethylene oleyl phenyl ether, polyoxyethylene nonyl phenyl ether, oxyethylene-oxypropylene block copolymer, t-octyl phenoxyethyl polyethoxyethanol, and nonylphenoxy ethyl polyethoxyethanol.

The polyoxyethylene glycol alkyl ether may be present in an amount not less than 0.4 wt.% with respect to the total weight of the ink. If the amount is less than 0.4 wt.%, the stabilizing effect of the polyoxyethylene glycol alkyl ether is insufficient and storage stability of the ink and advantageous coating effects of the ink in printed images are not observed. Preferably the amount of polyoxyethylene glycol alkyl ether is not less than 0.5 wt.% and not more than 2.5 wt.% with respect to the total weight of the ink.

More specifically, an oleyl or stearyl type polyoxyethylene glycol alkyl ether can be included at from 0.4 wt.% to 2.5 wt.%, and can be defined by the following formulations:
Oleyl type polyoxyethylene glycol alkyl ether

C₁₈H₃₅(CH₂CH₂O)ₙH Formula I

Stearyl type polyoxyethylene glycol alkyl ether

C₁₈H₃₇(CH₂CH₂O)ₙH, Formula II

where n ranges from 2 to 100, preferably 10 to 100. The main difference between the oleyl type and the stearyl type polyoxyethylene glycol alkyl ether is the presence of a single "cis" unsaturated (oleyl) group along the hydrocarbon chain in Formula I, whereas the hydrocarbon chain in Formula II is fully saturated.

The oleyl type polyoxyethylene glycol alkyl ether may be obtained commercially under the trade name Brij^{®} OX, where O represent oleyl and X is from 2-20 (i.e. n of Formula I is from 2 to 100, preferably 10 to 30). In one specific example, Brij^{®} O10 (where n=10 in Formula I) works well in accordance with examples of the present disclosure. Other examples surfactants that may be used include Brij^{®} O20 (n=20 in Formula I), Brij^{®} O2 (n=2 in Formula I), Brij^{®} O3 (n=3 in Formula I), Brij^{®}) O5 (n=5 in Formula I), etc. Other tradenames are e.g. Rokanol O20 = Oleyl alcohol, ethoxylated (supplied by PCC Exol).

The stearyl type polyoxyethylene glycol alkyl ether may be obtained as a formulation sold under the trade name Brij^{®} SX, where S represent stearyl and X is from 2-20 (i.e. n of the Formula II above is from 2 to 20). Examples include Brij^{®} S10 (n=10 in Formula II), Brij^{®} S5 (n=5 in Formula II), Brij^{®} S15 (n=15 in Formula II), Brij^{®} S20 (n=20 in Formula II), Brij^{®} S2 (n=2 in Formula II), Brij^{®} S7 (n=7 in Formula II), etc.

When comparing stearyl ethoxylates of different suppliers, slight differences in behavior can be found, since the alkyl length is in most cases not exactly e.g. a C₁₈ chain but a mixture with alkyl chains with a different length e.g. containing also C₁₆ chains. Furthermore, when comparing different tradenames with a different degree of ethoxylation, even though the average the degree of ethoxylation might be the same, there might be a difference in the chain length distribution. E.g. a Brij S20 does not only contain chains with 20 EO units but also chains with shorter and longer degree of ethoxylation. Besides the stearyl ethoxylates with tradename Brij^{®} SX, one can also use e.g. Sympatens AS/100 (MB) = Steareth-10 (supplied by KLK Oleo), SYMPATENS AS/200 (MB) = Steareth-20 with HLB = 15,2 (supplied by KLK Oleo), Hedicol-EM/102 (FC) (MB) = Alcohol C₁₈ ethoxylated with HLB = appr. 8 (supplied by KLK Oleo), Hedicol-EM-101 FC MB = Alcohol C₁₈ ethoxylated with HLB = appr. 9,5 (supplied by KLK Oleo), ROLFOR HT25 = Alcohols, C₁₆₋₁₈, ethoxylated with HLB = appr. 16 (supplied by Lamberti) and Rokanol S20 - steareth-20 (supplied by PCC Exol).

The alkyl ethoxylate may also contain a mixture of saturated and unsaturated alkyl groups, e.g. Rokanol K21 ie. Alcohols, C₁₆₋₁₈ and C₁₈-unsatd., ethoxylated (supplied by PCC Exol).

The polyoxyethylene glycol alkyl ether can contain also other alkylene oxide units besides ethylene oxide, e.g. propylene oxide, and butylene oxide. Examples are Ecosurf LF30 = C_{12/14}-(EO)10(BO)1, Ecosurf LF45 = C_{12/14}-(EO)10(BO)2, Ecosurf LF20 = C_{12/14}-(EO)10(BO)3 (Supplied by Dow), Plurafac LF401 = CAS regsitry number 69227-21-0 = C₁₂₋₁₈-(EO/PO)n (supplied by BASF), Sympatens-ASP/150 = Alcohol C₁₈, propoxylated = CAS registry number 25231-21-4 (supplied by KLK Oleo)

### A.3. Pigments

The pigments of the aqueous inkjet ink according to the invention, may be black, white, cyan, magenta, yellow, red, orange, violet, blue, green, brown, mixtures thereof, and the like. A colour pigment may be chosen from those disclosed by HERBST, Willy, et al. Industrial Organic Pigments, Production, Properties, Applications. 3rd edition. Wiley - VCH, 2004. ISBN 3527305769.

Suitable pigments are disclosed in paragraphs [0128] to [0138] of WO 2008/074548.

The pigment particles are dispersed in an aqueous medium by means of a polymeric dispersant or a surfactant. Self-dispersible pigments may also be used. If combined with capsules having anionic dispersing groups, anionic surfactants may be preferably used as dispersant for the pigment. A self-dispersible pigment is a pigment having on its surface covalently bonded anionic hydrophilic groups, such as salt-forming groups or the same groups used as dispersing groups for the capsules, that allow the pigment to be dispersed in an aqueous medium without using a surfactant or a resin. Suitable commercially available self-dispersible colour pigments are, for example, the CAB-O-JET^{™} inkjet colorants from CABOT.

A particularly suitable class of pigments to be included in the inkjet inks of the invention, are encapsulated pigments wherein the pigment is at least partially covered with a polymer, preferably a crosslinked polymer. Suitable examples of encapsulated pigments are described in [0070-0076] of US2014/092168, hereby incorporated by reference.

Pigment particles in inkjet inks should be sufficiently small to permit free flow of the ink through the inkjet-printing device, especially at the ejecting nozzles. It is also desirable to use small particles for maximum colour strength and to slow down sedimentation.

The average pigment particle size is preferably between 0.050 and 1 µm, more preferably between 0.070 and 0.300 µm and particularly preferably between 0.080 and 0.200 µm. Most preferably, the numeric average pigment particle size is no larger than 0.150 µm. The average particle size of pigment particles is determined with a Brookhaven Instruments Particle Sizer Bl90plus based upon the principle of dynamic light scattering. The ink is diluted with water to a pigment concentration of 0.002 wt.%. The measurement settings of the BI90plus are: 5 runs at 23°C, angle of 90°, wavelength of 635 nm and graphics = correction function.

However, for white pigment inkjet inks, the numeric average particle diameter of the white pigment is the same as described in § B.1.

Suitable white pigments are given by Table 2 in [0116] of WO 2008/074548. The white pigment is preferably a pigment with a refractive index greater than 1.60. The white pigments may be employed singly or in combination. Preferably titanium dioxide is used as pigment with a refractive index greater than 1.60. Suitable titanium dioxide pigments are those disclosed in [0117] and in [0118] of WO 2008/074548.

Suitable polymeric dispersants for the pigments are copolymers of two monomers but they may contain three, four, five or even more monomers. The properties of polymeric dispersants depend on both the nature of the monomers and their distribution in the polymer. Co-polymeric dispersants preferably have the following polymer compositions:
- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

Suitable dispersants are DISPERBYK^{™} dispersants available from BYK CHEMIE, JONCRYL^{™} dispersants available from BASF and SOLSPERSE^{™} dispersants available from Lubrisol. A detailed list of non-polymeric as well as some polymeric dispersants is disclosed by MC CUTCHEON. Functional Materials, North American Edition. Glen Rock,N.J.: Manufacturing Confectioner Publishing Co., 1990. p.110-129.

The polymeric dispersant has preferably a number average molecular weight Mn between 500 and 30000, more preferably between 1500 and 10000.

The polymeric dispersant has preferably a weight average molecular weight Mw smaller than 100,000 g/mol, more preferably smaller than 50,000 g/mol and most preferably smaller than 30,000 g/mol.

The pigments are preferably present in the range of 0.01 to 20 %, more preferably in the range of 0.05 to 10 % by weight and most preferably in the range of 0.1 to 5 % by weight, each based on the total weight of the inkjet ink. For white inkjet inks, the white pigment is preferably present in an amount of 3% to 40% by weight of the inkjet ink, and more preferably 5% to 35%. An amount of less than 3% by weight cannot achieve sufficient covering power.

### A.4. Water-soluble organic solvent

One or more water-soluble organic solvents may be added to the aqueous inkjet ink according to the invention for a variety of reasons. For example, it can be advantageous to add a small amount of an organic solvent to improve the dissolution of a compound in the inkjet ink to be prepared, to obtain better penetration in porous substrates or to prevent fast drying of ink at the nozzle of the inkjet head. Preferable water-soluble organic solvents are water-soluble alkane diols (e.g. ethylene glycol, propylene glycol, butylene glycol, 1,6-hexanediol, 1 ,2-hexanediol, 1,5-pentanediol, 1,2-pentanediol, 2,2-dimethyl-1 ,3-prapanediol, 2-methyl-2,4-pentanediol, 3-methyl-1 ,5-pentanediol, 3-methyl-1 ,3-butanediol, and 2-methyl-1 ,3-propanediol, polyols (e.g. glycerin, 2-ethyl-2-(hydroxymethyl)-1,3-propanediol, 1,2,4-butanetriol,), N-hydroxyethyl-pyrrolidon, N-butyl-pyrrolidon, amines (e.g., ethanolamine, and 2-(dimethylamino)ethanol), monohydric alcohols (e.g., methanol, ethanol, and butanol), 2,2'-thiodiethanol, amides such as N,N-dimethylformamide, heterocycles such as 2-pyrrolidone and N-methyl-2-pyrrolidone, and acetonitrile.

Examples of the glycol ether include monoalkyl ethers of glycol selected from ethylene glycol, diethylene glycol, triethylene glycol, tetraethylene glycol, dipropylene glycol, and tripropylene glycol. More specifically, triethylene glycol monomethyl ether, triethylene glycol monobutyl ether, and dipropylene glycol monopropyl ether can be preferably exemplified. Other useful examples which are listed in the Swiss list A and hence compatible with food packaging are: Propylene Glycol Monomethyl Ether; Propylene Glycol Monoethyl Ether; Propylene Glycol Monopropyl Ether; Ethylene Glycol Monobutyl Ether; Propylene Glycol Monobutyl Ether; Diethylene Glycol Monoethyl Ether; Diethylene Glycol Monobutyl Ether; Dipropylene Glycol Mono n-Propyl Ether; Dipropylene Glycol Methyl Ether; Tripropylene Glycol Monomethyl Ether.

The aqueous inkjet ink according to the invention comprises a water-soluble organic solvent, the water-soluble organic solvent is preferably present in an amount equal to 3 wt.% or more and equal to 60 wt.% or less, more preferably in an amount equal to 20 wt.% or more and equal to 60 wt.% or less with respect to the total weight of the ink. The water-soluble organic solvent is preferably a water-soluble alkane diol.

When the amount of water-soluble solvent is below 3 wt.% with respect to the total weight of the ink, the effect of preventing fast drying of the ink at the nozzle of the inkjet head is insufficient. An amount of water-soluble solvent above 60 wt.% with respect to the total weight of the ink leads to a too high VOC exhaustion of the ink during printing.

### A.5. Additives

The inkjet ink according to the invention may also contain humectants. Humectants are preferably incorporated in the inkjet ink if this liquid has to be applied by means of a jetting technique such as inkjet or valve jet. Humectants prevent the clogging of nozzles. The prevention is due to its ability to slow down the evaporation rate of the inkjet ink, especially the water in the liquid. The humectant is preferably an organic solvent having a higher boiling point than water. Suitable humectants include triacetin, N-methyl-2-pyrrolidone, glycerol, urea, thiourea, ethylene urea, alkyl urea, alkyl thiourea, dialkyl urea and dialkyl thiourea, diols, including ethanediols, propanediols, propanetriols, butanediols, pentanediols, and hexanediols; glycols, including propylene glycol, polypropylene glycol, ethylene glycol, polyethylene glycol, diethylene glycol, tetraethylene glycol, and mixtures and derivatives thereof. A preferred humectant is glycerol.

The humectant is preferably added to the liquid formulation in an amount of 0.1 to 20 wt.% based on the total weight of the liquid.

The aqueous inkjet ink of the invention may also comprise a wax. The wax in the ink improves wet rub or wet scratch resistance of the printed layer.

As such, the wax may be polyethylene waxes, petroleum waxes, paraffin waxes, carnauba waxes, polypropylene waxes, crystalline and microcrystalline waxes, amide waxes (oleamide, stearamide, erucamide, cyclic amide, etc... ), and combinations thereof. In an aspect of the invention, the wax may be a high-density polyethylene wax.

In an aspect of the invention, the wax may be a polyethylene wax or modified paraffin wax. An example of polyethylene wax includes high density polyethylene (HDPE) wax, which has a density ranging from about 0.93 g/ml to 0.97 g/ml.

Some specific examples of wax that may be used include those of the JONCRYL Wax series (such as JONCRYL Wax 22, JONCRYL Wax 26, and JONCRYL Wax 120 available from BASF Corp.), those of the AQUACER series (such as AQUACER 498, AQUACER 501, AQUACER 505, AQUACER 513, AQUACER 530, AQUACER 531, AQUACER 535, AQUACER 537, AQUACER 539, and AQUACER 552 available from BYK-Gardner, Columbia, Md. ) and Liquilube 404E from Lubrizol .

The wax may be present in the ink in an amount ranging from 3 to 30 wt.%, more preferably from 5 to 25 wt.%, relative to the total solids weight of the ink.

The inkjet ink may contain a surfactant preferably selected for the group consisting of a glycol surfactant, an acetylene alcohol surfactant and a polysiloxane surfactant. The use of these surfactants further reduces bleeding to improve printing quality, and also improves the drying property in printing to allow high-speed printing.

The acetylene glycol surfactant and/or the acetylene alcohol surfactant is preferably one or more selected from 2, 4, 7, 9-tetramethyl-5-decine-4, 7-diol, alkylene oxide adducts of 2,4,7,9-tetramethyl-5-decine-4, 7-diol, 2,4-dimethyl-5-decin-4-ol, and alkylene oxide adducts of 2,4-dimethyl-5-decin-4-ol. These are available, for example, from Air Products (GB) or from Nissin Chemical Industry, e.g Olfine (registered trademark) such as Olfine E1010, 104 series and Surfynol (registered trademark) E series, as 465 and Surfynol 61.

A biocide may be added to the aqueous inkjet ink composition to prevent unwanted microbial growth, which may occur over time. The biocide may be used either singly or in combination. Suitable biocides include sodium dehydroacetate, 2-phenoxyethanol, sodium benzoate, sodium pyridinethion-1-oxide, ethyl p-hydroxybenzoate and 1,2-benzisothiazolin-3-one and salts thereof.

Preferred biocides are Proxel^{™} GXL and Proxel^{™} Ultra 5 available from ARCH UK BIOCIDES and Bronidox^{™} available from COGNIS.

A biocide is preferably added to the aqueous medium in an amount of 0.001 to 3 wt.%, more preferably 0.01 to 1.0 wt. %, each based on the total weight of the ink.

The aqueous inkjet ink may further comprise at least one thickener for viscosity regulation in the liquid. Suitable thickeners are hydrophilically modified PU thickeners (HEUR) like Thijet 170 from Lamberti and alkali swellable emulsions (ASE) like BYK LP-R21675 from BYK.

The thickener is added preferably in an amount of 0.01 to 20 wt.%, more preferably 0.1 to 10 wt.% based on the liquid.

### B. Ink set .

The aqueous inkjet ink according to the invention may comprise at least one aqueous inkjet ink according to the invention and at least an aqueous pre-treatment liquid containing a fixing agent or an aqueous varnish containing a resin.

### B.1. Pre-treatment liquid

An aqueous pre-treatment liquid is preferably used with the aqueous inkjet ink of the invention to print images onto low-absorbing or non-absorbing substrates. The aqueous pre-treatment liquid as part of the ink set according to the invention comprises a fixing agent.

The fixing agent serves to crash, precipitate or destabilize the ink colorants such as dyes or pigments and hence fix them to the substrate. This leads to an improved image quality due to less bleeding, less feathering and/or less coalescence.

The fixing agent is preferably a multivalent metal salt or a cationic polymer.

The multivalent metal salt may be present in the pre-treatment liquid to improve image quality of the inkjet printed image. Generally, the multivalent metal salt may be any water-soluble multivalent metal salt. In specific examples, the multivalent metal salt may include calcium chloride (CaCl₂), magnesium chloride (MgCl₂), magnesium sulfate (MgSO₄), aluminium chloride (AlCl₃), calcium nitrate (Ca(NO₃)₂), magnesium nitrate (Mg(NO₃)₂), magnesium acetate (Mg(CH₃COO)₂), zinc acetate (Zn(CH₃COO)₂) calcium propionate (Ca(C₂H₅COO)₂), or a combination thereof. In further examples, the multivalent metal salt may include a metal cation selected from calcium, copper, nickel, magnesium, zinc, barium, iron, aluminium, chromium, or another multivalent metal.

Polymeric cationic polymers, suitable as fixing agent in the pre-treatment liquid contain either guanidinium or fully quaternized ammonium functionalities, such as quaternized polyamine copolymers. Generally, the weight average molecular weight (Mw) of the cationic polymer allows viscosity less than 25 cP at 25°C (measured on a Brookfield viscometer). Typical Mw are less than 500.000, and in one aspect, less than 50.000.

Suitable classes of cationic polymers that can be used include, but are not limited to, quaternized polyamines, dicyandiamide polycations, diallyldimethyl ammonium chloride copolymers, quaternized dimethylaminoethyl(meth)acrylate polymers, quaternized vinylimidizol polymers, alkyl guanidine polymers, alkoxylated polyethylene imines, and mixtures thereof.

The medium of the pre-treatment liquid according to the invention contains water as a vehicle but may include one or more water-soluble organic solvents. Suitable water-soluble organic solvents are listed in §. A.4.

The pre-treatment liquid in the ink set according to the invention may comprise a resin. The resin improves the mechanical and water resistance of the printed image. The resin is preferably selected from a group consisting of an aqueous soluble carboxylic acid containing polymer or salt thereof, a carboxylic acid anhydride containing polymer, a poly(urethane) or copolymer thereof, an acrylate or copolymer thereof, a poly(ester) or copolymer thereof and a poly(styrene) or copolymer thereof and a microcapsule comprising a crosslinked polymeric shell surrounding a core, the core comprises a second polymer.

In a preferred embodiment of the invention the microcapsule to be included in the pre-treatment liquid of the ink set of the invention is a microscapsule as described in §. A.1.

The pre-treatment liquid may contain at least one pH adjuster. Suitable pH adjusters include organic amines, NaOH, KOH, NEt₃, NH₃, HCl, HNO₃ and H₂SO₄.

The pre-treatment liquid may contain a surfactant. Any known surfactant may be used but preferably a non-ionic oxirane, mono(2-propylheptyl) ether or fatty alcohol alkoxylate or a combination of both is used.

If the pre-treatment liquid included in the ink set of the invention comprises a microcapsule comprising a crosslinked polymeric shell surrounding a core, the core comprises a second polymer, a polyoxyethylene glycol alkyl ether may be used.

A biocide may be added to the pre-treatment liquid composition to prevent unwanted microbial growth, which may occur over time. The biocide may be used either singly or in combination. Suitable biocides include sodium dehydroacetate, 2-phenoxyethanol, sodium benzoate, sodium pyridinethion-1-oxide, ethyl p-hydroxybenzoate and 1,2-benzisothiazolin-3-one and salts thereof.

Preferred biocides are Proxel^{™} GXL and Proxel^{™} Ultra 5 available from ARCH UK BIOCIDES and Bronidox^{™} available from COGNIS.

A biocide is preferably added to the aqueous medium in an amount of 0.001 to 3 wt.%, more preferably 0.01 to 1.0 wt. %, each based on the total weight of the liquid.

The pre-treatment liquid may further comprise at least one thickener for viscosity regulation in the liquid. Suitable thickeners are hydrophilically modified PU thickeners (HEUR) like Thijet 170 from Lamberti and alkaline soluble emulsions (ASE) like Byk LPR21675 from Byk Chemie or polyacrylic ester copolymers such as copolymers of ethyl acrylate and methacrylic acid, and salts thereof.

The thickener is added preferably in an amount of 0.01 to 20 wt.%, more preferably 0.1 to 10 wt.% based on the liquid.

### B.2. Aqueous varnish.

The ink set according to the invention comprising the aqueous inkjet of the invention, as described in §A., may contain an aqueous varnish. This varnish is used to protect the inkjet printed image against wet & dry rubbing, scratches and solvents. The varnish therefor, comprises water and resin particles.

Examples of the resin particles included in the varnish include well-known resins such as a urethane-based resin, an acrylic resin, a fluorene-based resin, a polyolefin-based resin, a rosin modified resin, a terpene-based resin, a poly-ester-based resin, a polyamide-based resin, an epoxy-based resin, and a vinyl chloride-based resin. The vinyl chloride-based resin includes a vinyl chloride copolymer such as a vinyl chloride-vinyl acetate copolymer. These resins may be used alone, or two or more thereof may be used in combination.

In a preferred embodiment of the invention, the resin particle is a microcapsule comprising a crosslinked polymeric shell surrounding a core, the core comprises a second polymer as described in §A.1.

The varnish contains the resin in an amount from 1 wt.% to 30 wt.% with respect to the total mass of the liquid. When the content of the resin in the varnish is within the aforementioned range, the effect of improving rub resistance of the image tends to become more excellent. More preferably the varnish contains the resin in an amount from 3 to 15 wt.% with respect to the weight of the liquid. Most preferably the varnish contains the resin in an amount from 5 wt.% to 12 wt.% with respect to the weight of the liquid.

The varnish as comprised in the liquid set according to the invention may comprise a wax. The wax may improve the durability of the printed image. Generally, any suitable wax may be used in the varnish composition. Suitable waxes are described in § A.5.

Humectants and biocides may be added to the varnish. Suitable humectants and biocides are listed in § A.5.

### C. Inkjet printing method

In a preferred inkjet recording method, the method comprises the steps of:
a) jetting an aqueous inkjet ink on a substrate, the ink comprising a pigment, a polyoxyethylene glycol alkyl ether, a water-soluble organic solvent, a microcapsule comprising a crosslinked polymeric shell surrounding a core, the core comprises a second polymer; and
b) drying the jetted inkjet ink by applying heat.

Before the jetting of the inkjet ink according to the invention, an aqueous pre-treatment liquid can be applied onto the substrate. The aqueous pre-treatment liquid comprises a fixing agent capable of aggregating components of the aqueous inkjet ink of the invention. Examples of such fixing agents are selected from the group consisting of multivalent salts, cationic surfactants and cationic resins.

In another preferred inkjet recording method, the method comprises the steps of: a) applying an aqueous pre-treatment liquid on a substrate, the pre-treatment liquid comprising a fixing agent and a dispersion of microcapsules consisting of a crosslinked polymeric shell and a core, the core comprising a second resin. b) optionally at least partially dry the applied aqueous pre-treatment liquid; and c) jetting an aqueous inkjet ink onto the applied pre-treatment liquid, the ink comprising comprising a pigment, a polyoxyethylene glycol alkyl ether, a water-soluble organic solvent, a microcapsule comprising a crosslinked polymeric shell surrounding a core, the core comprises a second polymer; and d) drying the jetted inkjet ink. If step b) was not performed, or the drying of the pre-treatment liquid was not completed, the drying in step d) should be performed by applying heat.

Another preferred embodiment of the invention is one of the above described recording methods, wherein after the jetting of the inkjet ink according to the invention, an aqueous varnish is applied on at least a part of the jetted inkjet in. The varnish is preferably applied by means of an inkjet head.

The substrate in the inkjet recording method may be porous, such as e.g. textile, paper and leather, but preferably a low-absorbing substrate such as card board substrates or non-absorbing substrates such as polyethylene, polypropylene, polycarbonate, polyvinyl chloride, polyesters like polyethylene terephthalate (PET), polyethylene naphthalate (PEN), polylactide (PLA), polymethylmethacrylate or polyimide.

The substrate may also be a paper substrate, such as plain paper or resin coated paper, e.g. polyethylene or polypropylene coated paper. There is no real limitation on the type of paper and it includes newsprint paper, magazine paper, office paper, wallpaper but also paper of higher grammage, usually referred to as boards, such as white lined chipboard, corrugated board, packaging board an folded card board.

In another preferred inkjet recording method, the pre-treatment liquid is applied via a technique selected from the group of ink jetting, valve jetting and spraying. More specifically, these techniques of ink jetting and valve jetting allow, the pre-treatment liquid according to the invention to be applied image wise, preferably onto the surfaces whereupon the inkjet ink will be printed to obtain an image. These last means of applying the pre-treatment liquid has the advantage that the amount of required pre-treatment liquid is substantially lower than with other application methods of priming the substrate.

Examples of the heating process to dry the pre-treatment liquid or the inkjet ink according to the invention include, but are not limited to, heat press, atmospheric steaming, high-pressure steaming, THERMOFIX. Any heat source can be used for the heating process; for example, an infrared ray source is employed.

The drying step can be performed at the air, but the heating step must be performed by using heat sources; examples include equipment for forced-air heating, radiation heating such as IR-radiation, including NIR-, CIR- and SWIR radiation, conduction heating, high-frequency drying, and microwave drying. The drying step is such that a temperature of the printed images is preferably obtained below 150°C.

A preferred ink jet head for the inkjet printing system to jet the inkjet ink of the invention is a piezoelectric ink jet head. Piezoelectric inkjet jetting is based on the movement of a piezoelectric ceramic transducer when a voltage is applied thereto. The application of a voltage changes the shape of the piezoelectric ceramic transducer in the print head creating a void, which is then filled with ink or liquid. When the voltage is again removed, the ceramic expands to its original shape, ejecting a drop of ink from the ink jet head. However, the jetting of the aqueous inkjet ink of the present invention is not restricted to piezoelectric inkjet printing. Other inkjet print heads can be used and include various types, such as a continuous type, a thermal print head type, a MEM-jet type head and a valve jet type.

### D. Examples

### D.1. Materials

All materials used in the following examples were readily available from standard sources such as Sigma-Aldrich (Belgium) and Acros (Belgium) unless otherwise specified. The water used was demineralised water.
- **Dynacoll 7150** is a polyester polyol containing terephthalic ester and isophthalic ester units supplied by Evonik
- **Ymer N90** is 1,3 diol polyether supplied by Perstorp
- **Ymer N120** is 1,3 diol polyether supplied by Perstorp
- **Reaxis C708** is a catalyst supplied by Reaxis BV
- **IPDI** is an IPDI monomer supplied by Evonik
- **Vestanat T1890E** IPDI, is a 70% IPDI trimer solution in butyl acetate, supplied by Evonik
- **Desmodur N3200** is an HDI based polyisocyanurate supplied by Covestro
- **Desmodur N75** is a HDI biuret from Covestro
- **Lakeland ACP70** is a 70% solution of a N-coco alkyl β-alanine derivative, supplied by Espachem
- **BD** is 1,4-butane diol supplied by Acros
- **Triethylamine** is triethylamine supplied by Acros
- **PU-3** is an aqueous dispersion of a polyurethane resin and is prepared as the resin PU-3 in WO2019/106089 A.
- **2,2'-Azobis(2-methylbutyronitrile)** is an initiator obtained from Wako Chemicals
- **NeoCryl A-1127** is a 44 wt.% aqueous polyacrylate dispersion from DSM NeoResins
- **Mowinyl 6969D** is a 42 wt.% anionic aqueous polyacrylate dispersion from Japan Coating Resin Corporation
- **Mowinyl 6940** is a 48 wt.% cationic aqueous polyacrylate dispersion form Japan Coating Resin Corporation
- **Hydropalat WE3650** is a wetting agent from BASF
- **Fixing agent** is 50 wt.% of Mg(NO₃)₂.6H₂O solution in water
- **Aquacer 2700** is a non-ionic emulsion based on a Fischer Tropsch wax from BYK Chemie
- **PD** is 1,2-propanediol, manufactured by Dow Chemical
- **Ultralube GA 1042** is a wax supplied by KEIM-ADDITEC SURFACE GMBH.
- **DPM** is Dowanol DPM, manufactured by Dow Chemical
- **SolvMIX** is a 1:1 mixture of Dowanol DPM and glycol
- **COL-1** is a commercial black pigment dispersion supplied by Lubrizol **Corp.,** available under the trade name HSDKX-1
- **COL-2** is a commercial magenta pigment dispersion supplied by Lubrizol Corp., available under the trade name HSDMX-1
- **COL-3** is a commercial yellow pigment dispersion supplied by Lubrizol Corp., available under the trade name HSDYX-1
- **HD** is 1,2-hexanediol
- **SURF-1** is Surfynol 104PG50 supplied by Evonik
- **SURF-2** is BRIJ S20 supplied by CRODA Chemicals International LTD
- **SURF-3** is 0,4% Tego Foamex 822 and 0,4% K933 in water
- **K933** is a wetting agent from BASF
- **D.I.** is deionised water
- **SUBST-1** is Ensocoat, a coated cardboard liner from Stora Enzo

### D.2. Measuring methods

### D.2.1. Aqueous ink coatings

Pre-treatment liquids were coated with an automated bar coater using a 4 µm spiral bar at 'speed 5' on SUBST-1. The coated pre-treatment liquids were then dried for 1 minute at 60°C in an oven to obtain a pre-treatment coating. Consequently, inkjet inks were coated onto the pre-treatment coating with an automated bar coater using a 10 µm spiral bar at 'speed 11'on the respective substrates. The coated inkjet inks were dried for 5 minutes in an oven at 80°C.

### D.2.2. Storage stability

Aqueous inkjet inks were stored for 14 days at 60°C in a closed vessel. Before and after the storage, the average particle size of the pigment particles and/or microcapsules was measured by means of a PSS Nicomp from Nicomp.

An inkjet ink is considered stable upon storage, if the average particle size of the pigment particles or polymer pigment composite particles did not increase by more than 15 % after a storage of 14 days at 60°C. If the average particle size of the pigment or polymer pigment composite particles increased more than this value, jetting reliability was severely hampered because of nozzle clogging of inkjet heads.

### D.2.3. Gloss of ink coatings

The measurement of the gloss of the dried ink coatings obtained in § D.2.1. is done by means of a GLOSS Zehntner at a viewing angle of 60°.

### D.2.4. Ink jetting reliability by printing

Ink jetting reliability by printing was measured as follows: inkjet inks were jetted via a Ricoh Gen 5MF printhead at 38 kHz and a dot coverage of 70% for 5 minutes After this process a nozzle check pattern was printed and evaluated in terms of the number of failing/misdirected nozzles. Having more than 1 nozzle failing or misdirected is evaluated as NOK. Latency was evaluated as follows: inkjet inks were jetted via a Ricoh Gen 5MF printhead at 38 kHz and a dot coverage of 70% after a given period of idle mode (non-jetting). The evaluation of the latency was based on the amount of fully functional (not failing or misdirected) nozzles of the inkjet head after restarting the jetting process after a given amount of time in idle mode with the nozzles uncapped.

### D.3. Preparation of microcapsules

### D.3.1. Preparation of the second polymers

### <PU-1 solution>

The polyurethane-solution PU-1 was prepared according to following steps. Ymer N90 was preheated in an oven at 60 C. 543 g of Ymer N90 was transferred to a 10 liter double jacketed reactor. The reactor is equipped with a nitrogen inlet and a slow nitrogen flow was put over the reactor. Subsequently 3815 g of ethyl acetate is added to the reactor. 2171 g of Dynacol 7150 was added to a stirred reactor. The reactor was heated to 60 °C in order to get a clear solution. In a 1 liter Erlenmeyer 20 g of Reaxis C708 is dissolved in 175 gram of ethyl acetate and added to the reactor. The reactor was heated to 70 C. Subsequently 276 g of Vestanat IPDI was added via an addition funnel with pressure equalization arm during 20 minutes. Subsequently the reaction was allowed to react overnight during 19 hours at 70 °C. Then the reactor was cooled to room temperature. A solids content of 45.0% of the PU-1 solution was determined by drying a small sample (2 g) during 120 minutes at 120 C.

### <PU-2 solution>

The polyurethane-solution PU-2 is prepared according to following steps. 84.65 g of Dynacol 7150 was dissolved in 201.45 g of ethyl acetate at room temperature in an Erlenmeyer of 500 ml. Subsequently 56.44 g of Ymer N90 was added. The Ymer N90 was preheated in an oven at 90 C. This solution was prepared one day in advance of the polycondensation reaction. A catalyst solution was prepared by dissolving 1.07 g of Reaxis C708 in 9.67 g of Ethyl acetate. A 3-necked round bottom flask of 500 ml equipped with a coiled condenser and an overhead stirrer was used for the polycondensation reaction. The solution of Ymer N90 and Dynacol 7150 was transferred to the round bottom flask. The catalyst solution was added to the round bottom flask. The reactor content was heated to 75 °C. 16.94 g of Vestanat IPDI was added an addition funnel with pressure equalization arm for 33 minutes. Then the round bottom flask was put to 70 °C and the reaction was allowed to react overnight for 22 hours. After reacting overnight, the reactor content was put again to 75 °C for 30 minutes and then cooled to room temperature. The solids content of the PU-2 solution, determined the same way as with PU-1, was 41.85%.

### <PU-3 solution>

The polyurethane-solution PU-3 is prepared according to following steps. 2171.14 g of Dynacol 7150 was dissolved in 2951.11 g of ethyl acetate at 80 °C in a 12 liter double jacketed reactor. The reactor was equipped with a coiled condenser and an overhead stirrer. Once a clear solution was obtained the solution was allowed to cool to room temperature. As soon as the solution reached room temperature the stirring was stopped. This Dynacol 7150 solution was prepared one day in advance of the polycondenstation reaction. 542.78 g of Ymer N120 was weighed in a 2 liter erlenmeyer. Ymer N90 was firstly preheated at 90 °C in order to become liquid and become more handleable. 856.17 g of ethylacetate was added to the Ymer N90 and stirred using a magnetic stirrer until a clear solution was obtained. The Ymer solution the solution was allowed to cool to room temperature. Once a clear solution was obtained the stirring was stopped. Also, this Ymer solution was prepared one day in advance. A catalyst solution was prepared by dilution of 20.30 g of Reaxis C708 with 182.72 g of ethyl acetate. The catalyst solution was added to an addition funnel with pressure equalization arm and the reactor was stirred using the overhead stirrer. Solution of Ymer N90 was transferred to the 12 liter double jacketed reactor and combined with the Dynacol 7150 already present in the reactor. Subsequently the catalyst was added via an addition funnel with pressure equalization arm for 5 minutes. The content of the reactor was heated to 75 °C. Subsequently 275.78 g of Vestanat IPDI was added via an addition funnel with pressure equalization arm for 90 minutes. Then the reactor content was heated to 70 °C and the reaction was allowed to react overnight for 22 hours. After reacting overnight, the reactor content was put again to 75 °C for 30 minutes and then cooled to room temperature. A solids content, as determined above, was 45.21%.

### D.3.2. Preparation of microcapsule dispersions

An anionic microcapsule dispersion CAP-1 (=comparative) was prepared via interfacial polymerization using an organic phase comprising the PU-1 solution and a polyisocyanate Tolonate HDB LV and an aqueous phase comprising surfactant Lakeland ACP70, triethyl amine and I-lysine.

The aqueous phase was prepared in a 10 liter Radleys reactor, one day in advance of the dispersion preparation. The following products were added to the reactor: 430 g of Lakeland ACP70, 166 g of L-lysine and 6210 g of demi-water. The reactor was heated to 60 °C and stirred for 30 minutes to dissolve the components into the water. The aqueous solution was cooled to room temperature and the solution was kept for the next day without stirring. Then 184 gram of triethylamine is added to the aqueous solution of Lakeland ACP70 and I-Lysine and stirred for 45 minutes. The organic phase is prepared max. 1 hour in advance of the dispersion preparation in a 5 liter round bottom flask. The following products were added to the flask: 1012 g of PU-1 solution, 1366 g of Tolonate HDB LV and 1800 g of ethyl acetate. The aqueous phase and organic phase were dispersed using high shear and subsequently the ethyl acetate was evaporated. After evaporation of the ethyl acetate the emulsion was kept at 30°C during 18 hours in a stirred reactor and filtered over a 2.7 micron filter. The solids content of the obtained microcaps dispersion was 27.1 %.

An inventive microcapsule dispersion CAP-2 was prepared via interfacial polymerization using an organic phase comprising a weight ratio of PU and polyisocyanate (Desmodur N3200) of 50/50 and using an aqueous phase containing Brij S20.

In a first 100 ml pot the following products were added: 27.19 g of PU-2 solution, 25.16 g of ethyl acetate, 11.38 g of Desmodur N3200. In a second pot (250 ml) was added 3.38 g Brij S20 and 62.03 g of D.I. Both pots were put in an ice bath. The content of organic solution mixture was added to the aqueous solution mixture and dispersed using a high shear mixing device and subsequently the ethyl acetate was evaporated. The obtained dispersion was then cured at 60 °C overnight for 18 hours. The solids content of the obtained microcapsule dispersion was 26.22%.

A comparative microcapsule dispersion CAP-3 was prepared by means of an interfacial polymerisation using an organic phase comprising the PU-3 solution and a polyisocyanate Desmodur N3200 and an aqueous phase comprising surfactant Lakeland ACP70, triethyl amine and I-lysine.

The aqueous phase was prepared one day in advance in a 4 liter reactor at room temperature. 78 g of L-lysine was added to the reactor and 203 g of Lakeland ACP70 was added. The 2928 g of demi-water was added and the stirring was started. Subsequently 87 g of triethyl amine was added. The reactor was heated to 60 °C until everything is dissolved. The reactor was cooled to room temperature and the stirring was stopped. The organic phase was prepared max. 1 hour in advance of the dispersing step in a round bottom flask of 3 liter. To the round bottom flask were added: 252 g of the PU-3 solution, 341 g of Desmodur N3200 and 806 g of ethyl acetate. 1569 g of the aqueous phase was weighed in a stainless-steel pot and placed in a ice bath. A dispersion was prepared using high shear mixing device and subsequently the ethyl acetate was evaporated. The aqueous dispersion was added to a 4 liter reactor and heated to 60 °C during 16 hours. After cooling to room temperature, the emulsion was filtered over a 2.7 µ filter. The solids content of the obtained microcaps dispersion was 31.3 %.

### D.4. Preparation of aqueous inkjet inks and pre-treatment liquids

Inkjet inks were prepared by mixing the compounds given in Table 1. All weight percentages are relative to the total weight of the inkjet inks.

**Table 1: Composition of comparative and inventive aqueous inkjet inks**

| Ingredient | C-INK1 | C-INK2 | C-INK3 | C-INK4 | I-INK1 |
|---|---|---|---|---|---|
| PD | 36.5 | 35.0 | 37.0 | 28.5 | 36.5 |
| SURF-1 | - | 0.67 | 0.67 | 0.67 | - |
| CAP-1 | 22.1 | 21.4 | 21.4 | - | 22.1 |
| CAP-3 | - | - | - | 19.17 | |
| COL-1 | 20.3 | - | - | 19.51 | 20.6 |
| COL-2 | - | 22.5 | - | - | - |
| COL-3 | - | - | 19.6 | - | - |
| SURF-2 | - | - | - | - | 0.5 |
| Ultralube GA 1042 | 0.5 | 0.5 | 0.25 | - | 0.5 |
| D.I. | To complete to 100% | To complete to 100% | To complete to 100% | To complete to 100% | To complete to 100% |

**Table 1 (continued)**

| Ingredient | I-INK2 | I-INK3 | I-INK4 | I-INK5 | I-INK6 |
|---|---|---|---|---|---|
| PD | 36.5 | 33.3 | 35.0 | 37.0 | 33.3 |
| SURF-1 | - | 0.27 | 0.67 | 0.67 | 0.27 |
| CAP-1 | 22.1 | - | - | - | 21.3 |
| CAP-2 | - | 20.8 | 20.8 | 20.8 | - |
| COL-1 | 20.6 | 20.1 | - | - | 20.1 |
| COL-2 | - | - | 22.5 | - | - |
| COL-3 | - | - | - | 19.6 | - |
| SURF-2 | 2.5 | 0.5 | - | - | 0.5 |
| Ultralube GA 1042 | 0.5 | 0.3 | 0.5 | 0.25 | 0.3 |
| D.I. | To complete to 100% | To complete to 100% | To complete to 100% | To complete to 100% | To complete to 100% |

To obtain comparative and inventive ink sets, pre-treatment liquids were prepared by mixing the ingredients of Table 2.

**Table 2: Composition of pre-treatment liquid PL-1**

| Ingredient | PL-1 |
|---|---|
| Mowinyl 6940 | 12.5 |
| Hydropalat WE3650 | 1.0 |
| SURF-3 | 10.0 |
| Fixing agent | 30.0 |
| Aquacer 2700 | 2.5 |
| PD | 25.0 |
| pH adjusted with triethanol amine | 5.3 |
| D.I. | To complete to 100% |

### D.5. Results of storage stability tests

The comparative ink C-INK1 and inventive inks I-INK1 and I-INK2 were stored as described in § D.2.2. The results of the average particle size increase after storage during14 days at 60°C. of both inks is listed in Table 3.

**Table 3: Average particle size increase of inks after storage.**

| | Average particle size increase (%) |
|---|---|
| C-INK1 | 22 |
| I-INK1 | 11 |
| I-INK2 | 5 |

From the results in Table 3, it is clear that the inventive ink according to the invention shows an improved storage stability with respect to the comparative ink which does not contain a polyoxyethylene glycol alkyl ether.

### D.6. Results of jetting reliability experiments.

The jetting reliability of comparative ink C-INK1 and inventive ink I-INK1 was determined as described in § D.2.4. The results are summarized in Table 4.

**Table 4:Jetting reliability by printing of comparative and inventive inks**

| INK | Reliability by printing (5 min at 38 kHz) | Failing nozzles after 10 min idle mode | Time in idle mode to observe >10 misdirected nozzles |
|---|---|---|---|
| C-INK4 | NOK | 0 | 5 min |
| I-INK6 | OK | 0 | > 10 min |

From Table 4 it can be concluded that the inventive ink comprising the polyoxyethylene glycol surfactant shows a more reliable jetting after a restart than with the comparative ink.

### D.7. Results of gloss measurements

Comparative and inventive ink sets comprising a pre-treatment liquid PL-1 and an aqueous ink were coated as described in § D.2.1.

The results of gloss measurements of the coatings obtained with comparative and inventive ink sets are listed in Table 5.

**Table 5: Gloss values of coated pre-treatment liquids and aqueous inkjet inks**

| Ink set | | Gloss value |
|---|---|---|
| PL-1 + C-INK2 | Comparative magenta ink set | 31.7 |
| PL-1 + C-INK3 | Comparative yellow ink set | 32.5 |
| PL-1 + I-INK3 | Inventive black ink set | 55.6 |
| PL-1 + I-INK4 | Inventive magenta ink set | 53.5 |
| PL-1 + I-INK5 | Inventive yellow ink set | 51.4 |

From Table 5, it can be seen that the inventive ink sets, comprising an aqueous inkjet ink containing a polyoxyethylene glycol alkyl ether, lead to higher gloss values of the coated inks than the comparative ink sets.

## Claims

1. An aqueous ink comprising a pigment, a polyoxyethylene glycol alkyl ether, a water-soluble organic solvent, a microcapsule comprising a crosslinked polymeric shell surrounding a core, the core comprises a second polymer.

2. The aqueous ink according to Claim 1 wherein the polymeric shell comprises a polymer selected from the group consisting of poly(urea), poly(urethanes), poly(amides), poly(esters), poly(carbonates), poly(sulfonamides) or combinations thereof.

3. The aqueous ink according to any of the preceding claims wherein the second polymer is selected from the group consisting of poly(urethanes) and copolymers thereof, acrylics and copolymers thereof, poly(esters), poly(styrenes) and copolymers thereof, poly(vinyl amides) and copolymers thereof, poly(olephines) and copolymers thereof, poly(vinyl alcohol) derivatives and copolymers thereof, poly(acetals) and copolymers thereof, poly(ethers) and copolymers thereof, poly(vinyl ethers) and copolymers thereof, polyvinyl (esters) and copolymers thereof, poly(imides) and copolymers thereof, poly(imines) and copolymers thereof, polycarbonates and copolymers thereof, poly(vinyl chloride) and copolymers thereof, poly(vinylidene chloride) and copolymers thereof poly(amic acids) and copolymers thereof, poly(saccharides) and derivatives thereof and cellulose and derivatives thereof.

4. The aqueous ink according to any of the preceding claims wherein the water-soluble organic solvent is a water-soluble alkane diol in an amount not less than 3 wt.% and not more than 60 wt.% with respect to the total weight of the ink.

5. The aqueous ink according to any of the preceding claims wherein the polyoxyethylene glycol alkyl ether is a C₁₂-C₁₈ polyoxyethylene glycol alkyl ether having an ethylene oxide number equal to 100 or less and equal to 10 or more.

6. The aqueous inkjet ink according to any of the preceding claims wherein the amount of polyoxyethylene glycol alkyl ether is not less than 0.5 wt.% and not more than 2.5 wt.% with respect to the total weight of the ink.

7. The aqueous inkjet ink according to any of the preceding claims wherein the pigment is encapsulated by means of a cross-linked polymeric shell.

8. The aqueous inkjet ink according to any of the preceding claims wherein a dispersing group is covalently bonded to the crosslinked polymeric shell.

9. The aqueous inkjet ink according to Claim 8 wherein the dispersing group is selected from the group consisting of a carboxylic acid or salt thereof, a sulfonic acid or salt thereof, a phosphoric acid ester or a salt thereof, and a phosphonic acid or salt thereof,

10. An ink set comprising an aqueous pre-treatment liquid and an aqueous inkjet ink, the pre-treatment liquid comprises a fixing agent, the aqueous inkjet ink comprises a pigment, a polyoxyethylene glycol alkyl ether, a water-soluble organic solvent, a microcapsule comprising a crosslinked polymeric shell surrounding a core, the core comprises a second polymer.

11. The ink set according to Claim 10 wherein the fixing agent is a multivalent salt or a cationic polymer.

12. The ink set according to Claim 10 or Claim 11 wherein the ink set further comprises a varnish comprising water and a resin.

13. The ink set according to claims 10 to 12 wherein the aqueous pre-treatment liquid comprises a microcapsule, the microcapsule comprises a crosslinked polymeric shell surrounding a core, the core comprises a second polymer.

14. An inkjet recording method comprising the steps of:
a) applying an aqueous pre-treatment liquid on a substrate, the pre-treatment liquid comprising a fixing agent; and
b) optionally at least partially drying the pre-treatment liquid.
b) jetting the aqueous inkjet ink as defined in claims 1 to 9; and
c) drying the jetted inkjet ink and if step b) was not performed, drying the pre-treatment liquid by applying heat.

15. The inkjet recording method according to Claim 14 wherein the aqueous pre-treatment liquid is as defined in Claim 13.
